# EUROPEAN PATENT SPECIFICATION

(11) **EP 0 647 984 B1**
(45) Date of publication and mention of the grant of the patent: **12.01.2000**
(21) Application number: 94115895.8
(22) Date of filing: 07.10.1994
(51) Int. Cl.: H01R 4/24, H02K 3/52

(54) **A connecting construction between a coil wire and a lead wire and a stator having such a connecting construction**
Verbindungsvorrichtung für einen Wicklungsdraht und einen Anschlussdraht sowie Stator mit einer solchen Verbindungsvorrichtung
Dispositif de connexion pour un fil d'enroulement et un fil de raccordement et un stator avec un tel dispositif de connexion

(30) Priority: 12.10.1993 JP 27900793; 02.12.1993 JP 33950693
(43) Date of publication of application: 12.04.1995
(73) Proprietor: Mitsuba Corporation, Kiryu-shi, Gunma (JP)
(72) Inventor: Arai, Makoto, Pana Heights Noguchi-206, Kiryu-shi, Gunma (JP); Shimoda, Yukihiro, Ri-Jyupiron A-201, Maebashi-shi, Gunma (JP)
(74) Representative: Hering, Hartmut, Dipl.-Ing.

(56) References cited:
- EP-A- 0 563 409
- US-A- 4 132 460
- US-A- 4 287 446
- PATENT ABSTRACTS OF JAPAN vol. 10, no. 170 (E-412), 17 June 1986 & JP 61 022744 A (NIPPON DENSO KK), 31 January 1986,

## Description

This invention relates to a connecting construction between a coil wire and a lead wire, which is effectively employed, for example, in a magneto generator which is mounted on a internal-combustion engine.

In general, a stator of a magneto generator which is mounted on a internal-combustion engine of a vehicle such as motorcycle, comprises:
a stator core in which a plurality of salient poles are arranged on a ring-shaped core;
coil bobbins are attached on a stator core so as to cover a part of the core and each salient pole; and
a group of coil wires, in which each coil wire is respectively wound on each coil bobbin. In this kind of the stator of the magneto generator, it is necessary to connect the coil wire end to a battery or headlight and the like of the vehicle for supplying the generated electricity.

In the past, as a construction for connecting a coil wire end and a lead wire to each other in a stator of a magneto generator, a connecting construction between a coil wire and a lead wire has been used, which comprises:
a concave area, which holds the coil wire;
a connection terminal which is installed to a coil wire concave area, which is hereby electrically connected to the coil wire;
the connecting construction between a coil wire and a lead wire in which the lead wire is electrically connected to the coil wire through the connection terminal. Proposed is a method for connecting the lead wire to the connection terminal, in which the electric conductor of the coil wire end is electrically connected to the so-called a poke-in tab terminal, a crimp wire barrel terminal, a posted terminal and the like, so that the terminal is electrically connected to the connection terminal.

This kind of the connecting construction between the coil wire and the lead wire was described in laying open of Japanese application No. 62-165764, No. 61-22744, 63-92239 and 5-146127.

However, in the case in which the above terminal is used in the stator of the magneto generator which is mounted on a vehicle such as motorcycle; when the in-use environmental temperature is approximately 150°C, which is a high temperature for the above terminal, furthermore, the vibration is intense, the contact resistance becomes large and heat-resistant insufficiency occurs, so that reliability deteriorates.

Furthermore, in the above stator of the magneto generator, the connecting construction between a coil wire and a lead wire are arranged on the same face, so that the connecting portions need a large area. It is consequently impossible to miniaturize the stator of the magneto generator. A method for miniaturizing is proposed, in which a terminal is formed in the insert manner so as to pass through the axial direction of a core when the core is provided with a unitary coil bobbin, so that the connecting portion of the coil wire and that of the lead wire are respectively made to face on the opposite sides, but in this method, it is impossible to automatize assembling.

US-A-4 287 446 (see preamble of claim 1) and US-A-4 132 460 (see preamble of claim 2) disclose a construction for facilitating the mounting of an electrical connector housing on the stator of an electric motor. These electrical connector housings comprise a generally prismatic terminal housing portion. Terminal receiving cavities extend into the terminal housing from the upper end thereof and lead wire-receiving slots are provided in the inner and outer sidewalls. The ends of the coil wires are electrically connected to the external conductors by locating the coil wires in the slots and inserting terminals into the cavities.

It is an object of the present invention to provide a connecting construction housing between a coil wire and a lead wire, which has high reliability in state in which the in-use environmental temperature is high, and in which the vibration is intense.

This object is solved by a connecting construction as defined by claim 1.

According to the present invention, the coil wire is electrically connected to the coil wire connection terminal, and the lead wire is electrically connected to the lead wire connection terminal through the lead terminal. The coil wire connection terminal and the lead wire connection terminal are unitarily connected to each other, so that the coil wire is electrically connected to the lead wire through the coil wire connection terminal, the lead wire connection terminal and the lead wire terminal.

Since the lead terminal for connecting the lead wire to the coil wire is strongly formed, and is strongly fixed in an inserted manner in the connection concave area, the heat resistance and the vibration proof are extremely high. Accordingly, the lead wire is electrically connected to the coil wire with heat resistance and vibration proof, it is therefore possible to maintain high reliability with respect to the contact resistance and the heat resistance in high temperature and intense vibration.

Since connection for the lead wire terminal in the coil wire side is done by inserting in the connecting portion of the lead wire connection terminal, it is possible to avoid the deterioration of the operations.

Furthermore, it is an object of the present invention to provide a connecting construction between a coil wire and a lead wire which can be miniaturized and automatized.

This object is solved by a connecting construction as defined by claim 2.

According to the present invention, the coil wire end is electrically connected at the coil wire end connecting portion, and the lead wire is electrically connected at the lead wire connecting portion through the lead wire connection terminal. The coil wire end connecting portion and the lead wire connecting portion are unitarily connected to each other, so that the coil wire end is electrically connected to the lead wire through the coil wire end connecting portion, the coil wire connection terminal, the lead wire connection terminal and the lead wire connecting portion.

Since the lead wire connecting portion is passed through the lead wire connection terminal from one coil bobbin to the other bobbin, the coil wire connecting portion and the lead wire connecting portion are distributed to each side of the stator core, severally. Therefore, the occupied areas of both terminals in plan view are miniaturized, and it is possible to miniaturize the stator core. Furthermore, the automatization of the operations to insert into one coil bobbin and to pass through the lead wire connection terminal is extremely easy.

### BRIEF DESCRIPTION OF THE DRAWINGS

In the accompanying drawings:

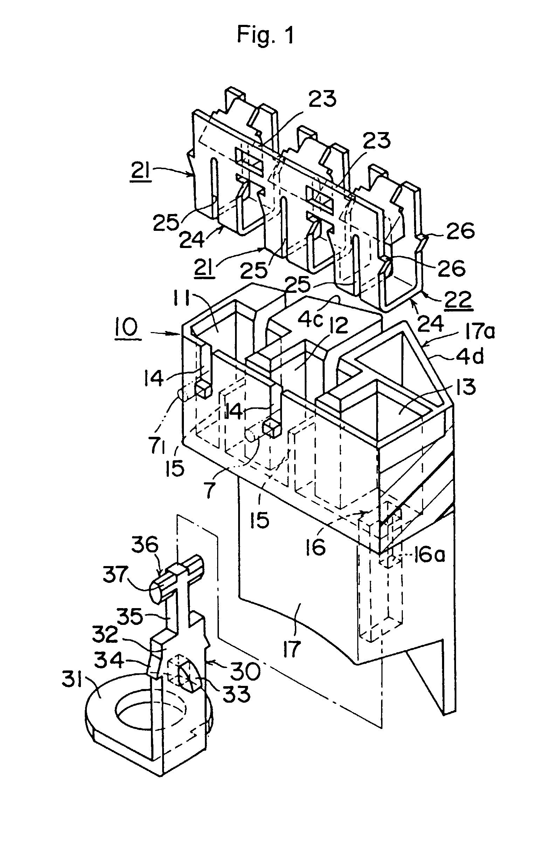

Fig.1 is an exploded perspective view showing a connecting construction between a coil wire and a lead wire in accordance with the first embodiment of the present invention;
Fig.2(a)-Fig.2(c) shows the assembled state in accordance with the first embodiment, Fig.2(a) is a back sectional view taken along the line II-II of Fig.3, Fig.2(b) is a side sectional view of Fig.2(a), Fig.2(c) is a enlarged partially sectional view of a part "c" of Fig.2(a);
Fig.3 is a plan view shows a stator in accordance with the first embodiment, in which the connecting construction between a coil wire and a lead wire is employed;
Fig.4(a) and Fig.4(b) show the state in accordance with the first embodiment, in which the coil bobbin is mounted on the stator core, Fig. 4(a) is a bottom plan view, Fig.4(b) is a sectional view taken along the line b-b of Fig.4(a);
Fig.5 is a exploded perspective view shows a connecting construction between a coil wire and a lead wire, in accordance with the second embodiment of the present invention.

In the first embodiment in accordance with the present invention, a connecting construction between a coil wire and a lead wire is integrated into a stator 1 of a magneto generator as a terminal holder 10. The stator 1 is provided with a stator core 2 in which salient poles A1∼A8 are radially arranged around a core 3 thereof. The stator core 2 is made by laminating a plurality of laminate-plates which are made from magnetic material. A plurality of rivets are passed through each laminates in the direction of the thickness thereof, which are fastened; so that the stator core 2 is made uniform. A coil bobbin 4 is unitarily made from resin having insulation properties, and is attached on the outside surface of the stator core 2. The coil bobbin 4 comprises: a main body 5 which is covering the core 3 which is ring shaped; and bobbin sections B1∼B8 which are covering each of the salient poles A1∼A8. A coil wire 6 is wound around each of the bobbin sections B1∼B8, respectively. Two coil wire ends 7 of the plural coil wire ends 7 of each coil 6 are electrically connected to a lead wire 8 by the terminal holder 10 described hereinafter.

In this embodiment, a coil bobbin 4 is divided, on the line which is perpendicular to the laminated direction of the core, on the horizontal line, into two parts (hereinafter, called a "upper bobbin 4a" and a " lower bobbin 4b"). The touching faces of upper bobbin 4a and the lower bobbin 4b are perpendicular to an axis of the core 3, and are positioned at the approximate center in the direction of the thickness of the core 3.

In this first embodiment, the terminal holder 10 between the coil wire material and the lead wire is constructed so that two coil wire ends 7 of the plural coil wire ends 7 of each coil 6 in the stator 1 might be connected to one lead wire 8. The terminal holder 10 is provided with: coil wire connection concave areas 11,12 for holding in a positioned state the coil wire end 7; and a lead wire connection concave area 13 for connecting to the lead wire 8. The coil wire connection concave areas 11,12 and the lead wire connection concave area 13 are arranged on the horizontal line; and are provided in an open manner on the opposite face (hereinafter, called an "upper face"), of the main body 5, of an engine-mounting-face. Each coil wire connection concave areas 11,12 and the lead wire connection concave area 13 are formed into a rectangular parallelopiped of an approximate square in plan view so that, hereinafter described, a pressure contact-terminal of a connection terminal can be forced thereinto.

A coil end putting slit 14 in which the coil wire ends 7 which can be carried are vertically provided in an open manner at the upper edge of the coil connection concave areas 11,12, so that each coil end putting slit 14 can hold a positioning in state in which each coil wire end 7 is inserted thereinto. A partition 15 is arranged on the bottom face of the coil connection concave areas 11,12 so as to be along the slit of the coil end putting slit 14, and is protrudely provided so as to face upwardly. An opening 16 is continuously provided in an open manner at the bottom of the lead wire connection concave area 13. The opening 16 is formed into a rectangular parallelopiped and a hole shape so that a lead wire terminal, described hereinafter, can pass therethrough from the engine-mounting-face (hereinafter called a "lower face").

Furthermore, a lead wire connecting portion 17 is unitarily provided in a protruding manner on the upper bobbin 4a, the portion of which is the opposite to a position in which the coil connection concave areas 11,12 and the lead wire connection concave area 13 are formed. The lead wire connecting portion 17 is a columnar shape, a sectional view of which is an approximate square. The height of the lead wire connecting portion 17 is of such a height so as to be able to go through the opposite side of the core 3 thereof when the coil bobbin 4 is mounted in the stator core 2.

The opening 16 is passed through by the lead wire connecting portion 17 from the bottom of the lead wire connection concave area 13. A engaging portion 16a is formed into a step-like shape at the vertical center of the opening 16. The engaging portion 16a is engaged to a raising portion which is described hereinafter. A fixing dent 18 for fixing the lead wire terminal is provided in a open manner on the lead wire connecting portion 17. The fixing dent 18 is comprised of: a positioning portion; and a nut-containing portion; a bolt-point containing portion when connected. The nut 38 is embedded in the fixing dent 18.

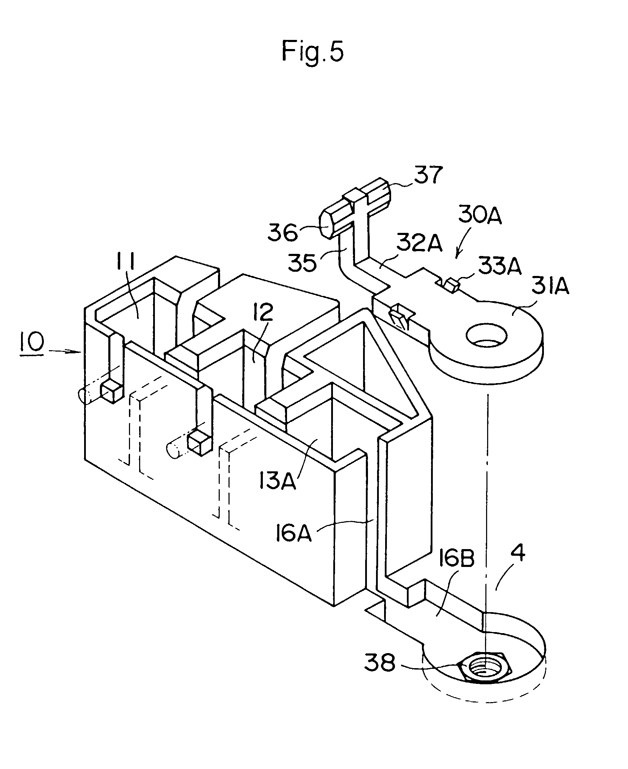

On the other side, at the position between the first salient pole A1 and the second salient pole A2 in the core of the stator core 2, a notch 19a is provided vertically so as to be opened at the circumferential face of the core 3. At the position between the first salient pole A1 and the second salient pole A2 in the core of the stator core 2, a notch 19b of a lower bobbin 4b is provided so as to correspond to the notch 19a. The lead wire connecting portion 17 which is protrudely provided on the lower face of the upper bobbin 4a is inserted in both notches 19a,19b with a mounting of the upper bobbin 4a from the upper side of the core 3. The lead wire connecting portion 17 is relatively fixed at the stator core 2 and the coil bobbin 4 with a mounting of the upper bobbin 4a and the lower bobbin 4b to the stator core 2. The end face-of the lead wire connecting portion 17 which is inserted in the notch 19a and the notch 19b is exposed at the end face of the lower bobbin 4b. Thus, in Fig.5(a), the exposed part of the upper bobbin 4a and the lower bobbin 4b are indicated by a dispersed point pattern.

In this embodiment, the notch 19b is provided at the position between the 4th salient pole A4 and the third salient pole A3 in the lower bobbin 4b as well. A connecting section 4e is formed at inside of the second bobbin section B2 and the third bobbin section B3 in the lower bobbin 4b, which connects between the first bobbin section B1 and the 4th bobbin section B4, and which is like-circular arc shaped. The second bobbin section B2 and the third bobbin section B3 are both connected to the connecting section 4e, respectively, and the second bobbin section B2 and the third bobbin section B3 and the other bobbins are integrated with the lower bobbin 4b during a resin-forming on the lower bobbin 4b.

In the state of being fixed at the stator core 2 hereinbefore, an outer face 17a of the lead wire connecting portion 17 comprises inside brims 4c,4d of the first bobbin section B1 and the second bobbin section B2 on the coil bobbin 4, respectively. That is to say, the outer face 17a of the lead wire connecting portion 17 forms a corner of an octagon-column shape.

The terminal holder 10 is provided with: a coil connection terminal 21 which is electrically connected to coil wire end 7; and a lead wire connection terminal 22 which is electrically connected to the lead terminal which is described hereinafter. In this embodiment, the coil wire connection terminals 21,21 are prepared in order to connect two coil wire ends 7,7.

The coil wire connection terminals 21,21 and one lead wire connection terminal 22 are unitarily connected to each other by each connecting portion 23 on the horizontal line, which are in state to made all of the upper end and all of the lower end thereof uniform. In this embodiment, the coil wire connection terminal 21 and the lead wire connection terminal 22 have the same construction, so that the construction is representatively described by a description of the lead wire connection terminal 22.

The coil wire connection terminal 21 is constructed by using a pressure contact-terminal 24. The pressure contact-terminal 24 is made from conductive material having elasticity such as brass, and is unitarily formed into approximately a ⊐ shape by a press working. A slit 25 is provided in a cutting manner so as to face upward at the approximate center portion of the lower portion of the pressure contact-terminal 24 on a horizontal line, which is formed so that the coil wire end 7 can be forced thereinto. A connecting portion of the lead terminal which is described hereinafter is forced into the slit 25 of the lead wire connection terminal 22. A projection 26 for stopping an ejection thereof protrudes outward on the side face of the pressure contact-terminal 24.

Furthermore, the terminal holder 10 is provided with a lead wire terminal 30 which is electrically connected to the lead wire 8. The lead wire terminal 30 is made from conductive material such as brass which is of great strength, which is unitarily formed into an approximately hook-like shape in side view by a press working. A lead wire fixing portion 31 is formed into an approximately circular-ring shape at the lower portion of the lead wire terminal 30, an inside diameter of which is a little larger than an inside diameter of a nut which is described hereinafter. A main body 32 is provided vertically at a part of an outer circumference of the lead wire fixing portion 31, which is formed into a board shape. A raising portion 33 for preventing ejection is protrudely provided at the center portion, in vertical direction, of the main body 32. A protrusion 34 is protrudely provided sideways on each main body 32, respectively.

A supporting portion 35 and a connecting portion 36 are unitarily formed into a letter-T shape together at the upper end portion of the main body 32. The center line of the supporting portion 35, the vertical portion of a letter-T shape, corresponds to the center line of the main body 32 in the vertical direction. On the other side, the connecting portion 36, the horizontal portion of a letter-T shape, is formed into a like-bar shape. The connecting portion 36, a vertical section of which is approximately rectangular, is formed into a like-bar shape, each corner of which is tapered, so that a tapered portion 37 is formed.

Next, an assembling work and the operation in accordance with the above construction are described. The terminal holder 10 and the stator 1 according to this embodiment are made clear in detail.

In advance, the lead wire terminal 30 is inserted in the opening 16, continuing to the lead wire connection concave area 13 from the lower side of the stator core 2. When inserting, a nut 38 is inserted in the end face of the stator core 2 of the lead wire fixing portion 31 of the lead wire terminal 30. Inserting the lead wire terminal 30 in the opening 16, the raising portion 33 and the protrusion 34 are engaged to a part of the inner side face of the opening 16, the connecting portion 36 of the lead wire terminal 30 is securely fixed in the lead wire connection concave area 13 by mechanical means. After that, fastening by a nut 38 and a bolt 39, the lead wire 8 touches the lead wire fixing portion 31 of the lead wire terminal 30, and the lead wire 8 is electrically connected to the lead wire terminal 30.

After each of the coils 6 are respectively wound around the bobbin sections B1∼B8 of the coil bobbin 4, the coil wire ends 7,7 which are wound around, for example, the first bobbin section B1 and the second bobbin section B2, are inserted in the coil end putting slit 14 of the adjacent coil connection concave areas 11,12, so that the coil wire ends 7,7 are held in position. In this state, each coil wire end 7 is supported by each partition 15.

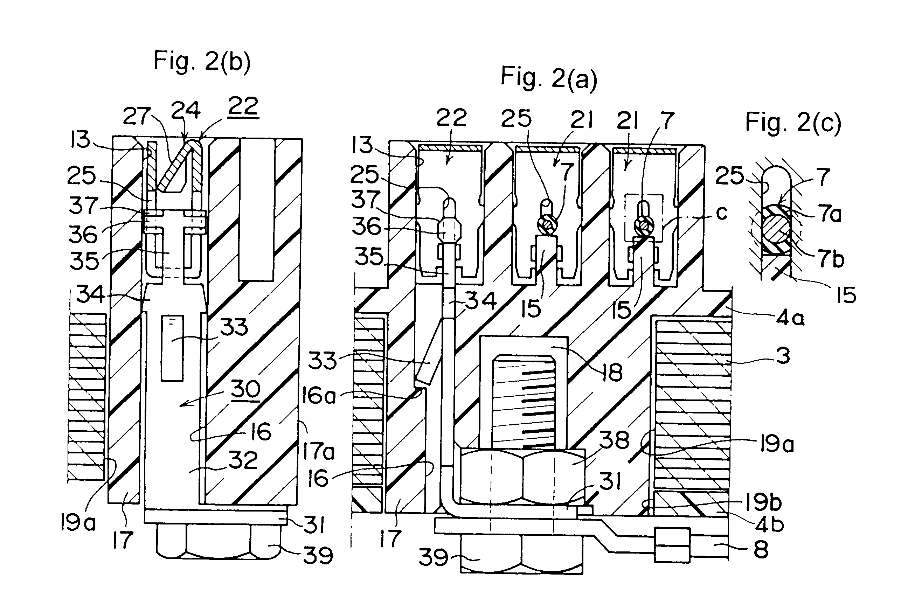

After that, the coil wire connection terminals 21,21 and the lead wire connection terminal 22 which are connected to each other side by side, are respectively forced into the coil connection concave areas 11,12 and the lead wire connection concave area 13. Forcing both the coil wire connection terminals 21,21 into the coil connection concave areas 11,12, each coil wire end 7 which is positioned at each coil end putting slit 14 and the partition 15 is forced into the slit 25 of each pressure contact-terminal 24. As shown in Fig.2(c), an enamel insulating coat 7a of the coil wire end 7 is flaked by an edge of the slit 25 when forcing the coil wire end 7 into the slit 25, so that the pressure contact-terminal 24 is in a state in which the pressure contact-terminal 24 is electrically connected directly to an electric conductor 7b of the coil wire end 7. Accordingly, the pressure contact-terminal 24 is electrically connected to the coil wire end 7 without flaking of the enamel insulating coat 7a of the coil wire end 7.

Forcing the lead wire connection terminal 22 into the lead wire connection concave area 13, the connecting portion 36 of the lead wire terminal 30 is forced into the slit 25 of the pressure contact-terminal 24, the connecting portion 36 of the lead wire terminal 30 is forced into the slit 25. Accompanying the forcing of the connecting portion 36 into the slit 25, a surface layer of the connecting portion 36 is cut by the edge of the slit 25, so that the pressure contact-terminal 24 touches on the connecting portion 36 strongly, and with a large area of contact. Accordingly, the pressure contact-terminal 24 is reliably electrically connected to the connecting portion 36 with a small contact resistance.

As above, in the embodiment, two coil wire ends 7,7 are electrically connected to a pair of coil wire connection terminals 21, the lead wire 8 is electrically connected to the lead wire connection terminal 22 through the lead wire terminal 30. A pair of coil wire connection terminals 21 and the lead wire connection terminal 22 are unitarily connected to each other by the connecting portion 23. Two coil wire ends 7,7 are therefore in a state to be electrically connected to the lead wire connection terminal 22 through a pair of coil wire connection terminals 21, the connecting portion 23, the lead wire connection terminal 22 and the lead wire terminal 30.

According to this embodiment, since the lead wire terminal 30 for connecting the lead wire 8 to the coil wire end 7 is strongly formed being made from material, the mechanical intensity of which is great, for example brass, and is strongly fixed mechanically in the lead wire connection concave area 13, the heat resistance and the vibration proof become extremely high. Accordingly, the lead wire 8 is electrically connected to the coil wire end 7 with the heat resistance and the vibration proof. Consequently, it is possible to maintain the high reliability relating to the heat resistance and the vibration proof in even stator 1 of the magneto generator which is used in a state in which the environmental temperature is high and in which the vibration is intense.

Both the coil wire connection terminals 21,21 and the lead wire connection terminal 22 are unitarily connected to each other by the connecting portion 23, so that it is necessary to have a correspondence between the time and the state of the forcing of the coil end 7 in the slit 25 of the coil wire connection terminal 21, and the time and the state of forcing the connecting portion 36 of the lead wire terminal 30 into the slit 25 of the lead wire connection terminal 22. If the lead wire terminal 30 is put upwards through the lower bobbin 4b, the core 3 and the upper bobbin 4a from the lower side, the opposite side to the inserting direction of the coil end 7 at the stator 1; it will be usually difficult to make a correspondence of the relation between the connecting portion 36 of the lead wire terminal 30 and the coil end 7 in each product. Because the position of the connecting portion 36 of the lead wire terminal 30 against the coil end 7 depends on the dimensional errors of the lead wire terminal 30, the thickness of the lower bobbin 4b, the thickness of the core 3 and the thickness of the upper bobbin 4a, adding to the errors, so that the dimensional error among the products is usually large.

However, in the embodiment, the lead wire connecting portion 17 for fixing the lead wire terminal 30 is unitarily formed at the only side of the upper bobbin 4b, and is inserted in the notch 19a and the notch 19b which are provided in a open manner at the core 3 and the lower bobbin 4b; which is hereby fixed at the stator core 2 and the coil bobbin 4, and it is usually possible to make a correspondence of the relation between the connecting portion 36 of the lead wire terminal 30 and the coil end 7 in each product. That is to say, in the embodiment, the position of the connecting portion 36 of the lead wire terminal 30 only corresponds to the dimensional errors of the lead wire terminal 30 and the lead wire connecting portion 17, and the dimensional error among the products is controlled to be small. Accordingly, the coil wire connection terminal 21 and the lead wire connection terminal 22 connecting to each other are respectively connected to the coil end 7 and the connecting portion 36 of the lead wire terminal 30, simultaneously and properly. It is therefore possible to realize an automation of the assembling operations of the connecting construction between a coil wire and a lead wire.

The lead wire connecting portion 17 is unitarily formed at the upper bobbin 4a, so that the connecting portion 36 of the lead wire terminal 30 is in a state in which the connecting portion 36 of the lead wire terminal 30 is reliably related to the coil end 7, properly. Accordingly,

the coil wire connection terminal 21 and the lead wire connection terminal 22 connecting to each other are respectively connected to the coil ends 7,7 which are independent of each other and the connecting portion 36 of the lead wire terminal 30, simultaneously and properly.

Fig.5 is an exploded perspective view showing a connecting construction between a coil wire and a lead wire in accordance with the second embodiment of the present invention.

The construction difference between the second embodiment and the first embodiment is to be constructed so that the lead wire terminal 30 may be inserted in a lead wire connection concave area 13A from above. That is to say, a engaging portion 16a is provided in a open manner so as to be a slit-like shape at the side wall of the lead wire connection concave area 13A, which is opposite to the coil wire connection concave area 12. A fixing hole 16B is provided at the upper face of the coil bobbin 4 so as to continue to the engaging portion 16a. A lead wire fixing portion 31A of the lead wire terminal 30A is inserted in the fixing hole 16B. A pair of raising portions 33A, 33A are engaged to both sides of the lead wire fixing portion 31A, and the lead wire terminal 30A is hereby fixed at the fixing hole 16B. A main body 32A of the lead wire terminal 30A is pass through the engaging portion 16a, the main body 32A is bent upward at the middle portion thereof. In this state, the connecting portion 36 which is supported by the supporting portion 35 is in a state equal to the first embodiment. Accordingly, in this embodiment as well, the lead wire connection terminal 22 is connected to the connecting portion 36 of the lead wire terminal 30 similar to the first embodiment. On the other side, the bolt (not shown) is screwed in 38, hereby, the lead wire (not shown) is electrically connected to the lead wire terminal 30A.

The present invention is not limited to this embodiment; in so far as the essence of the invention is not deviated from, it goes without saying that the present invention can be modified.

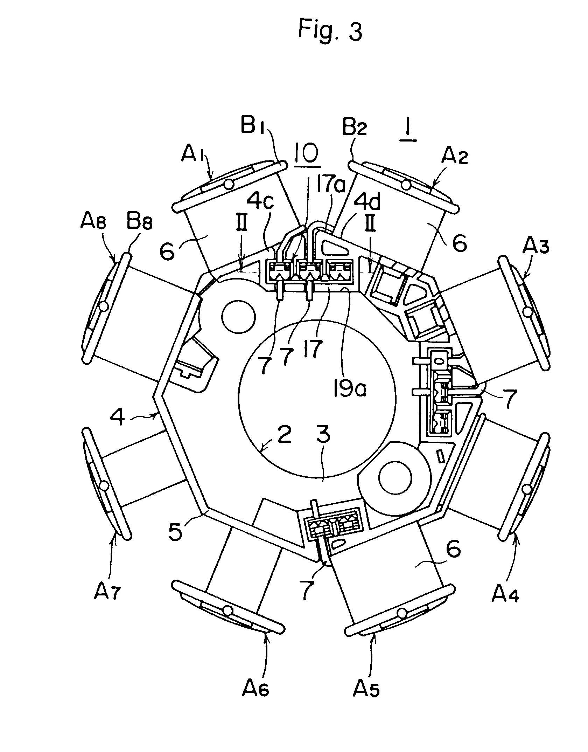

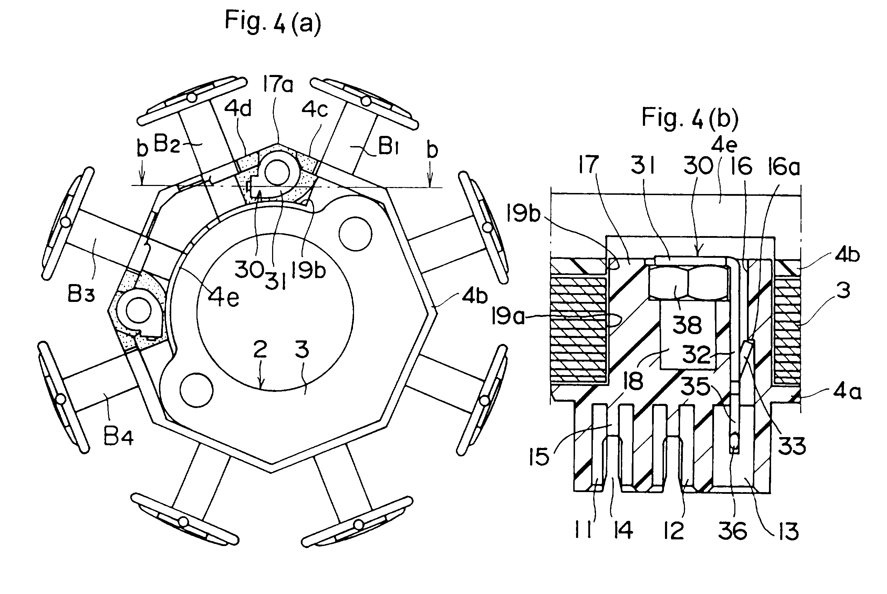

For instance, the number of the connecting constructions between a coil wire and a lead wire is not limited to one, as shown in Fig.3 and Fig.4; it is also possible that there are two or more than three. The position on which the terminal holder 10 is arranged is not limited to the upper bobbin 4a; it is also possible to be arranged at the lower bobbin 4b.

The electrical connecting means of the lead wire 8 to the lead wire terminal 30 is not limited to using a screw, it is possible to use caulking, soldering and the like as well.

In the above embodiments, the occasion in which the connecting construction between a coil wire and a lead wire is used at the stator of the magneto generator is described, however, the connecting construction between a coil wire and a lead wire in accordance with the present invention is not limited to the above embodiments, and it is possible to use the connecting construction between a coil wire and a lead wire to a rotative electric machine such as a motor as well. Especially, when the connecting construction between a coil wire and a lead wire in accordance with the present invention is used in conditions in which the temperature is high, and in which the vibration is intense, it is possible to get superior advantages.

## Claims

1. A connecting construction between a coil wire (6, 7) and a lead wire (8), wherein
a terminal holder (10) is provided with a first connection concave area (11, 12) for holding a coil wire (6, 7) and provided with a second connection concave area (13);
a connection terminal (21, 21) is electrically connected to a coil wire (6, 7) by being forced into said first connection concave area (11, 12); and
a lead wire (8) is electrically connected to the coil wire (6, 7) through the connection terminal (21, 21), wherein
a second connection terminal (22) is provided which is inserted into the second connection concave area (13);
and the second connection terminal (22) is unitarily formed with the coil wire connection terminal (21, 21) which is electrically connected to the coil wire (6, 7);
**characterized in that**
a lead wire terminal (30) is provided with two ends thereon, one end of which is connected to the lead wire (8) and the other end of which is arranged into the second connection concave area (13);
a connecting portion (36) is unitarily formed on the other end of the lead wire terminal (30), said connecting portion (36) being forced into the second connection terminal (22) so as to be electrically connected therebetween and is additionally securely fixed in the second connection concave area (13) by mechanical means.

2. A connecting construction between a coil wire (6, 7) and a lead wire (8), which is employed in a stator (1) of a magneto generator, wherein
a stator core (2) is provided with a plurality of salient poles (Al, A2, ...) which are protrudely provided from a circular basic portion;
a pair of coil bobbins (4; 4a, 4b) are provided to cover each of the salient pole (Al, A2, ...);
a coil is respectively wound around each of the salient pole (Al, A2, ...) through the coil bobbin (4); and a lead wire (8) is connected to the end of the coil,
**characterized in that**
one coil bobbin (4a) is unitarily provided between the adjacent salient poles (A1, A2, ...) and has a terminal holder (10) which is formed to extend into the other coil bobbin side;
the terminal holder (10) comprises a first connection concave area (11, 12), a second connection concave area (13) and a lead wire connecting portion (17);
the first connection concave area (11, 12) holds the end of the coil so as to be electrically connected thereto;
a coil wire connection terminal (21, 21) is provided which is inserted in the first connection concave area (11, 12);
a second connection terminal (22) is provided which is inserted into the second connection concave area (13), said second connection terminal being unitarily formed with the coil wire connection terminal (21, 21); and
a lead wire terminal (30) is provided with two ends thereon, one end of which is connected to the lead wire (8) at the other coil bobbin side, and the other end of which is arranged into the second connection concave area (13) at the one coil bobbin side, said lead wire terminal (30) being passed through the lead wire connecting portion (17), being forced into the second connection terminal (22) so as to be electrically connected therebetween and being additionally securely fixed in the second connection concave area (13) by mechanical means.

3. The connecting construction in accordance with claim 1 or 2 comprising:
a main body (32; 32A), which is formed into a approximately board shape in vertical plane; and
a lead wire fixing portion (31; 31A), which is formed into a approximately circular-ring shape in plan view at the lower end portion of the main body (32; 32A) and perpendicular to the main body, the inside diameter of which is little larger than an inside diameter of a nut (38) for fastening; and a supporting portion (35), which is in vertical plane, one end of which is connected to the upper end portion of the main body (32; 32A), and the connecting portion (36) is provided at the other end thereof.

4. The connecting construction in accordance with claim 3, wherein:
a protrusion(s) (33A, 33A; 34) for preventing the extraction thereof is (are) provided at the main body (32; 32A).

5. The connecting construction in accordance with claim 3, wherein:
a raising portion(s) (33A, 33A) for preventing the extraction thereof is (are) provided at the main body (32; 32A).

6. The connecting construction in accordance with claim 1 or 2 comprising:
a main body (32; 32A), which is formed into an approximately board shape in plan view;
a lead wire fixing portion (31; 31A), which is formed into an approximately circular-ring shape in plan view, which is in the plane which is the same plane as the main body (32; 32A), at one end portion of the main body, the inside diameter of which is a little larger than an inside diameter of a nut (38) for fastening; and
a supporting portion (35), one end of which is connected to the upper end portion of the main body (32; 32A), the connecting portion (36) is provided at the other end thereof, which is bent upwards at a portion thereof.

7. The connecting construction in accordance with claim 6, wherein:
a raising portion(s) (33A, 33A) for preventing the extraction thereof is (are) provided at the main body (32; 32A).

8. The connecting construction between the coil wire (6, 7) and the lead wire (8) in accordance with claim 1 or 2 wherein:
the connecting portion (36) is tapered so that the width might be come gradually smaller to the upper end thereof.

## Patentansprüche

1. Verbindungskonstruktion zwischen einem Spulendraht (6, 7) und einem Leitungsdraht (8), wobei
ein Anschlußhalter (10) mit einem ersten konkaven Verbindungsbereich (11, 12) zum Halten eines Spulendrahts (6, 7) versehen ist und mit einem zweiten konkaven Verbindungsbereich (13) versehen ist;
ein Verbindungsanschluß (21, 21) dadurch mit einem Spulendraht (6, 7) elektrisch verbunden ist, daß er in den ersten konkaven Verbindungsbereich (11, 12) gezwängt ist; und
ein Leitungsdraht (8) mit dem Spulendraht (6, 7) durch den Verbindungsanschluß (21, 21) elektrisch verbunden ist, wobei ein zweiter Verbindungsanschluß (22) vorgesehen ist, der in den zweiten konkaven Verbindungsbereich (13) eingefügt ist; und der zweite Verbindungsanschluß (22) mit dem Spulendraht-Verbindungsanschluß (21, 21) einheitlich ausgebildet ist, der mit dem Spulendraht (6, 7) elektrisch verbunden ist;
dadurch gekennzeichnet, daß
ein Leitungsdrahtanschluß (30) mit zwei Enden daran versehen ist, von welchen ein Ende mit dem Leitungsdraht (8) verbunden ist, und von welchen das andere Ende in den zweiten konkaven Verbindungsbereich (13) angeordnet ist;
ein Verbindungsteil (36) am anderen Ende des Leitungsdrahtanschlusses (30) einheitlich ausgebildet ist, wobei der Verbindungsteil (36) in den zweiten Verbindungsanschluß (22) gezwängt ist, um dazwischen elektrisch angeschlossen zu sein und zusätzlich im zweiten konkaven Verbindungsbereich (13) durch mechanische Mittel sicher fixiert ist.

2. Verbindungskonstruktion zwischen einem Spulendraht (6, 7) und einem Leitungsdraht (8), welche bei einem Stator (8) eines Magnetgenerators verwendet wird, wobei
ein Statorkern (2) mit einer Vielzahl von ausgeprägten Polen (A1, A2, ...) versehen ist, die von einem zirkularen Basisteil vorstehend vorgesehen sind;
ein Paar von Spulenkörpern (4; 4a, 4b) vorgesehen ist, um jeden der ausgeprägten Pole (A1, A2, ...) zu bedecken;
eine Spule jeweils um jeden der ausgeprägten Pole (A1, A2, ...) durch den Spulenkern (4) gewickelt ist; und ein Leitungsdraht (8) an dem Ende der Spule angeschlossen ist,
dadurch gekennzeichnet, daß
ein Spulenkern (4a) zwischen den benachbarten ausgeprägten Polen (A1, A2, ...) einheitlich vorgesehen ist und einen Anschlußhalter (10) hat, der ausgebildet ist, um sich in die andere Spulenkernseite zu erstrecken;
der Anschlußhalter (10) einen ersten konkaven Verbindungsbereich (11, 12), einen zweiten konkaven Verbindungsbereich (13) und einen Leitungsdraht-Verbindungsteil (17) aufweist;
der erste konkave Verbindungsbereich (11, 12) das Ende der Spule derart hält, daß es daran elektrisch angeschlossen ist;
ein Spulendraht-Verbindungsanschluß (21, 21) vorgesehen ist, der im ersten konkaven Verbindungsbereich (11, 12) eingefügt ist;
ein zweiter Verbindungsanschluß (22) vorgesehen ist, der in den zweiten konkaven Verbindungsbereich (13) eingefügt ist, wobei der zweite Verbindungsanschluß mit dem Spulendraht-Verbindungsanschluß (21, 21) einheitlich ausgebildet ist; und
ein Leitungsdrahtanschluß (30) mit zwei Enden daran vorgesehen ist, von welchen ein Ende an dem Leitungsdraht (8) an der anderen Spulenkernseite angeschlossen ist, und von welchen das andere Ende in den zweiten konkaven Verbindungsbereich (13) an der einen Spulenkernseite vorgesehen ist, wobei der Leitungsdrahtanschluß (30) durch den Leitungsdraht-Verbindungsteil (17) geführt wird, in den zweiten Verbindungsanschluß (22) gezwängt wird, um dazwischen elektrisch angeschlossen zu sein, und zusätzlich im zweiten konkaven Verbindungsbereich (13) durch mechanische Mittel sicher fixiert wird.

3. Verbindungskonstruktion nach Anspruch 1 oder 2, die folgendes aufweist:
einen Hauptkörper (32; 32A), der in vertikaler Ebene nahezu in Kartenform ausgebildet ist; und
einen Leitungsdraht-Fixierungsteil (31; 31A), der in Draufsicht am unteren Endteil des Hauptkörpers (32; 32A) und senkrecht zum Hauptkörper nahezu in kreisförmiger Form ausgebildet ist, wovon der Innendurchmesser etwas größer als der Innendurchmesser einer Mutter (38) zur Befestigung ist; und
einen Stützteil (35), der in vertikaler Ebene liegt, von welchem ein Ende mit dem oberen Endteil des Hauptkörpers (32; 32A) verbunden ist, und wobei der Verbindungsteil (36) an seinem anderen Ende vorgesehen ist.

4. Verbindungskonstruktion nach Anspruch 3, wobei:
ein Vorsprung (Vorsprünge) (33A, 33A; 34) zum Verhindern der Extraktion davon am Hauptkörper (32; 32A) vorgesehen ist (sind).

5. Verbindungskonstruktion nach Anspruch 3, wobei:
ein Erhöhungsteil (Erhöhungsteile) (33A, 33A) zum Verhindern der Extraktion davon am Hauptkörper (32; 32A) vorgesehen ist (sind).

6. Verbindungskonstruktion nach Anspruch 1 oder 2, die folgendes aufweist:
einen Hauptkörper (32; 32A), der in Draufsicht nahezu in Kartenform ausgebildet ist;
einen Leitungsdraht-Fixierungsteil (31; 31A), der in Draufsicht nahezu in kreisförmiger Form ausgebildet ist, die in der Ebene ist, die dieselbe Ebene ist, in der der Hauptkörper (32; 32A) liegt, an einem Endteil des Hauptkörpers, wobei der Innendurchmesser etwas größer als ein Innendurchmesser einer Mutter (38) zur Befestigung ist; und
einen Stützteil (35), von welchem ein Ende mit dem oberen Endteil des Hauptkörpers (32; 32A) verbunden ist, wobei der Verbindungsteil (36) an seinem anderen Ende vorgesehen ist, der an einem Teil davon nach oben gebogen ist.

7. Verbindungskonstruktion nach Anspruch 6, wobei:
ein Erhöhungsteil (Erhöhungsteile) (33A, 33A) zum Verhindern der Extraktion davon beim Hauptkörper (32; 32A) vorgesehen ist (sind).

8. Verbindungskonstruktion zwischen dem Spulendraht (6, 7) und dem Leitungsdraht (8) nach Anspruch 1 oder 2, wobei:
der Verbindungsteil (36) kegelförmig ist, so daß die Breite in Richtung zu seinem oberen Ende nach und nach kleiner werden könnte.

## Revendications

1. Dispositif de connexion pour un fil d'enroulement (6, 7) et un fil de raccordement (8), dans lequel
un support de borne (10) est équipé d'une première zone concave de connexion (11, 12) pour maintenir un fil d'enroulement (6, 7) et d'une deuxième zone concave de connexion (13) ;
une borne de connexion (21, 21) est électriquement connectée à un fil d'enroulement (6, 7) en étant introduite de force dans ladite première zone concave de connexion (11, 12) ; et
un fil de raccordement (8) est électriquement connectée à un fil d'enroulement (6, 7) par l'intermédiaire de la borne de connexion (21, 21), où
une deuxième borne de connexion (22) est fournie, qui est insérée dans la deuxième zone concave de connexion (13);
et la deuxième borne de connexion (22) est formée de façon unitaire avec la borne de connexion de fil d'enroulement (21, 21), qui est électriquement connectée au fil d'enroulement (6, 7) ;
caractérisé en ce que
une borne de fil de raccordement (30) est équipée avec deux extrémités, dont une extrémité est connectée au fil de raccordement (8) et l'autre extrémité est placée dans la deuxième zone concave de connexion (13) ;
une partie de connexion (36) est formée de façon unitaire sur l'autre extrémité de la borne de fil de raccordement (30), ladite partie de connexion (36) étant introduite de force dans la deuxième borne de connexion (22) pour assurer une connexion électrique entre les deux et est, en outre, solidement fixée dans la deuxième zone concave de connexion (13) par un moyen mécanique.

2. Dispositif de connexion pour un fil d'enroulement (6, 7) et un fil de raccordement (8), qui est employé dans un stator (1) d'un générateur-magnéto, dans lequel
un noyau de stator (2) est équipé d'une pluralité de pôles saillants (A1, A2, ...) qui sont en saillie à partir d'une partie de base circulaire ;
une paire d'armatures de bobine (4 ; 4a, 4b) est fournie pour recouvrir chaque pôle saillant (A1, A2, ...);
une bobine est respectivement enroulée autour de chaque pôle saillant (A1, A2, ...) par l'intermédiaire de l'armature de bobine (4) ; et un fil de racordement (8) est connecté à l'extrémité de la bobine,
caractérisé en ce que
une armature de bobine (4a) est fournie de façon unitaire entre les pôles saillants adjacents (A1, A2, ...) et a un support de borne (10) qui est formé pour s'étendre de l'autre côté de l'armature de bobine ;
le support de borne (10) comprend une première zone concave de connexion (11, 12) une seconde zone de connexion (13) et une partie de connexion de fil de raccordement (17);
la première zone concave de connexion (11, 12) maintient l'extrémité de la bobine pour être connectée électriquement à celle-ci ;
une borne de connexion de fil d'enroulement (21, 21) est fournie et est insérée dans la première zone concave de connexion (11, 12);
une deuxième borne de connexion (22) est fournie et est insérée dans la deuxième zone concave de connexion (13), ladite deuxième borne de connexion étant formée de façon unitaire avec la borne de connexion de fil d'enroulement (21, 21); et
une borne de fil de raccordement (30) est équipée de deux extrémités, dont une extrémité est connectée au fil de raccordement (8) de l'autre côté de l'armature de bobine, et l'autre extrémité est placée dans la deuxième zone concave de connexion (13) du premier côté de l'armature de bobine, ladite borne de fil de raccordement (30) passant par la partie de connexion de fil de raccordement (17), étant introduite de force dans la deuxième borne de connexion (22) afin d'être connectée électriquement entre celles-ci et d'être fixée solidement dans la deuxième zone concave de connexion (13) par un moyen mécanique.

3. Dispositif de connexion selon la revendication 1 ou 2, comprenant :
un corps principal (32 ; 32A), qui a approximativement la forme d'une plaque dans un plan vertical ; et
une partie de fixation de fil de raccordement (31 ; 31A), qui a approximativement la forme d'un anneau circulaire dans une vue en plan sur la partie d'extrémité inférieure du corps principal (32 ; 32A) et perpendiculaire au corps principal, dont le diamètre intérieur est légèrement plus grand que le diamètre intérieur d'un écrou (38) pour la fixation ; et une partie de support (35), qui est dans un plan vertical, dont une extrémité est connectée à la partie d'extrémité supérieure du corps principal (32 ; 32A), et la partie de connexion (36) est prévue à l'autre extrémité de celle-ci.

4. Dispositif de connexion selon la revendication 3, dans lequel :
une (des) saillie(s) (33A, 33A ; 34) empêchant l'extraction du dispositif est (sont) fournie(s) sur le corps principal (32 ; 32A).

5. Dispositif de connexion selon la revendication 3, dans lequel :
une (des) partie(s) surélevée(s) (33A, 33A) empêchant l'extraction du dispositif est (sont) fournie(s) sur le corps principal (32 ; 32A).

6. Dispositif de connexion selon la revendication 1 ou 2, comprenant :
un corps principal (32 ; 32A), qui a approximativement la forme d'une plaque dans une vue en plan ;
une partie de fixation du fil de raccordement (31 ; 31A), qui a approximativement la forme d'un anneau circulaire dans une vue en plan, qui est dans le même plan que le corps principal (32 ; 32A) à une partie d'extrémité du corps principal, dont le diamètre intérieur est légèrement plus grand que le diamètre intérieur d'un écrou (38) pour la fixation ; et
une partie de support (35), dont une extrémité est connectée à la partie d'extrémité supérieure du corps principal (32 ; 32A), la partie de connexion (36) étant prévue à l'autre extrémité de celui-ci, qui est courbée vers le haut au niveau d'une partie de celle-ci.

7. Dispositif de connexion selon la revendication 6, dans lequel :
une (des) partie(s) surélevée(s) (33A, 33A) empêchant l'extraction du dispositif est (sont) fournie(s) sur le corps principal (32 ; 32A).

8. Dispositif de connexion pour un fil d'enroulement (6, 7) et un fil de raccordement (8) selon la revendication 1 ou 2, dans lequel :
la partie de connexion (36) est conique de sorte que la largeur puisse devenir progressivement plus petite à l'extrémité supérieure de celle-ci.
